# EUROPÄISCHE PATENTSCHRIFT

(11) **EP 0 347 665 B1**
(45) Veröffentlichungstag und Bekanntmachung des Hinweises auf die Patenterteilung: **27.10.1993**
(21) Anmeldenummer: 89110453.1
(22) Anmeldetag: 09.06.1989
(51) Int. Cl.: G06K 1/12, G07F 17/42, G07B 15/02

(54) **Codiereinrichtung für Magnetkarten**
Apparatus for coding magnetic cards
Installation de codage pour cartes magnétiques

(30) Priorität: 11.06.1988 DE 3819909
(43) Veröffentlichungstag der Anmeldung: 27.12.1989
(73) Patentinhaber: Schulte-Schlagbaum Aktiengesellschaft, D-42553 Velbert (DE)
(72) Erfinder: Eisermann, Armin, D-5620 Velbert 1 (DE)
(74) Vertreter: Rieder, Hans-Joachim, Dr.

(56) Entgegenhaltungen:
- EP-A- 0 164 630
- DE-B- 1 050 375
- FR-A- 2 228 253
- US-A- 3 984 660
- US-A- 4 526 264

## Beschreibung

Die Erfindung betrifft eine Codiereinrichtung für Magnetkarten gemäß Gattungsbegriff des Hauptanspruchs.

Bei einer gattungsgemäßen Anordnung, wie sie die DE-A 1 050 375 offenbart, werden zur magnetografischen Aufzeichnung und Wiedergabe codierten Nachrichten ein magnetisierbarer Aufzeichnungsträger schrittweise ggf. aber auch bei Einhaltung eines bestimmten Verhältnisses zwischen Geschwindigkeit und Aufzeichnungstakt kontinuierlich verschoben. Diese Anordnung weist einen Aufzeichnungskopf in Form eines Stabes auf, der gegen den Aufzeichnungsträger bis zur völligen oder annähernden Berührung mit diesem bewegbar ist und bei einer solchen Berührung jeweils eine nahezu punktförmige Gleichfeldmarkierung bewirkt. Der Aufzeichnungskopf kann dabei als permanent erregter Stabmagnet oder aber auch als Stab aus magnetisch weichem Material ausgeführt sein, wobei letzterer eine Wicklung trägt, die von einem Generator mit einem Wirbelstrom erregt wird. An dieser Anordnung erweist sich jedoch als nachteilig, daß die Magnetisierungsstäbe, bei nicht eingeschobenem Aufzeichnungsträger ganz aus dem Kartendurchlaufkanal Zurückgezogen werden müssen

Der Erfindung liegt die Aufgabe zugrunde, eine Codiervorrichtung der in Rede stehenden Art von einfachem Aufbau so auszugestalten, daß trotz der in den Kartendurchlaufkanal ragenden Magnetisierungsstifte eine automatische Codierung vorgenommen werden kann.

Gelöst wird diese Aufgabe durch die kennzeichnenden Merkmale des Hauptanspruchs.

Zufolge derartiger Ausgestaltung ist eine Codiervorrichtung der in Rede stehenden Art geschaffen, mittels der auf einfache Weise Codierung auf der Magnetkarte erzeugbar sind. Das Codieren der Magnetkarten erfolgt im Durchlauf der Karten durch den Kartendurchlaufkanal. Jeder Magnetisierungsstift ragt mit seiner Stirnfläche in den Kartendurchlaufkanal und ist in einer Kanalquerbohrung unter Federvorspannung längsverschieblich angeordnet. Die Stirnfläche des Magnetisierungsstiftes ist dabei als Auflaufschräge gestaltet, so daß die Magnetkarte, wenn sie mit ihrer Vorderkante den Magnetisierungsstift beaufschlagt, eine Aussteuerungsfunktion auf dem Magnetisierungsstift ausübt, so daß dieser mit Sicherheit während des Durchlaufes auf der Breitfläche der Magnetkarte berührend aufsetzt und so eine optimale Magnetisierung erzeugen kann. Handelt es sich bezüglich der Magnetisierungsstifte und solche mit kreisförmigem Querschnitt, so ist die Auflaufschräge in Form einer Kegelstumpfmantelfläche gestaltet. Damit trotz Hineinragen des Magnetisierungsstiftes in den Kartendurchlaufkanal eine leichte Aussteuerung gegeben ist, weist jeder Magnetisierungsstift einen seinen Eintrittsweg in den Kartendurchlaufkanal begrenzende, mit einer entsprechenden Gegenschulter der Kanalquerbohrung zusammenwirkende Stufe auf. Die Anordnung ist gezielt so getroffen, daß während der Magnetisierung der Magnetkarten zwischen den Magnetisierungsstiften und der Kartenbreitseite Luftspalte vermieden sind. Es liegt eine solche Abstimmung zwischen der Magnetisierungszeit und der vorzugsweise konstanten Durchlaufgeschwindigkeit der Karte vor, daß sich während der Magnetisierung aufgrund der außerordentlich kurzen Magnetisierungszeit die Magnetkarte praktisch kaum bewegt. Das sieht in der Praxis so aus, daß mittels eines im Querschnitt vorzugsweise kreisförmigen Magnetisierungsstiftes auch an der Magnetkarte kreisfömige Magnetisierungsbereiche erzeugt werden. Ferner können mittels einer einzigen Magnetisierungseinrichtung mehrere Magnetisierungsbereiche an einer Magnetkarte erzeugt werden, welche Magnetisierungsbereiche auf einer Spur hintereinander liegen. Da die Magnetkarten in kurzer Zeit (während des Passierens des Kartendurchlaufkanals) codierbar sind, ist der Einsatz in Zugangskontrollanlagen, wie sie z. B. in Badeanstalten vorzufinden sind, möglich. Dem Badegast wird beim Eintritt in die Badeanstalt nach Zahlen einer Gebühr eine entsprechend codierte Magnetkarte ausgehändigt, mittels welcher ein an einer Schließfachtür vorgesehenes Magnetschloß betätigbar ist. Beim Verlassen der Badeanstalt wird dann die Magnetkarte einbehalten, um nach einer Codelöschung bei einer erneuten Ausgabe mit einer anderen Codierung versehen zu werden. Das Codieren kann automatisch, d. h. zum einen im Durchlaufverfahren und zum anderen mit Computersteuerung erfolgen.

Eine vorteilhafte Weiterbildung besteht darin, mehrere Magnetisierungseinrichtungen vorzusehen, deren Magnetisierungsstifte auf vom Längsrand des Kartendurchlaufkanals im unterschiedlichen Abstand angeordneten Kanallängsspuren liegen. Auf diese Weise lassen sich die Codierungsbereiche nach einem Systemmuster erzeugen. Trotz der Erzeugung einer Vielzahl von Magnetisierungspunkten braucht die Durchlaufgeschwindigkeit der Magnetkarte nicht verringert zu werden.

Es erweist sich dabei von Vorteil, daß die Magnetisierungsstifte in Spurlängsrichtung versetzt zueinander liegen. Durch diese Maßnahme braucht auf die Bauform der Magnetisierungseinrichtungen keine besondere Rücksicht genommen zu werden. Trotz dicht nebeneinander liegender Spurlinien, die ein feines Systemraster gestatten, brauchen nicht besonders dünne Magnetisierungsstifte bzw. Spulen eingesetzt zu werden. Die versetzt zueinander liegende Anordnung in Spurlängsrichtung erlaubt stets, daß die Magnetisierungeinrichtungen mit ihren Magnetisierungsstiften einen ausreichend großen Abstand voneinander einnehmen können. Auch kann auf diese Weise bei einem feststehenden Systemraster durch entsprechenden Versatz der Magnetisierungseinrichtungen sichergestellt werden, daß während des Durchlaufens niemals zwei Magnetisierungen gleichzeitig erfolgen. Vielmehr erfolgt das Magnetisieren seitlich versetzt. Die gegenseitige Beeinflussung von Magnetfeldern ist dadurch ausgeschlossen.

Magnetisierungstechnische Vorteile werden dadurch erreicht, daß die andere Breitseite des Kartendurchlaufkanals von einer aus ferromagnetischem Material bestehenden Kanalwandung gebildet ist.

Bei Einsatz der Codiervorrichtung in Zugangskontrollanlagen empfiehlt es sich, im Bereich des Kanalanfanges ein Kartenstapelmagazin vorzusehen. Die unmittelbare Nachbarschaft des Kartenstapelmagazins zum Kartendurchlaufkanal kommt dabei einem kurzfristigen Codieren der Magnetkarten sehr entgegen.

Hierzu trägt noch die Tatsache bei, einen die unterste Karte des Kartenstapels in den Kartendurchlaufkanal hineinbewegenden Schieber vorzusehen. Durch diesen wird die Magnetkarte bis zu einer Fördereinrichtung des Kartendurchlaufkanals verlagert, welche dann den weiteren Transport der Magnetkarte veranlaßt.

Ein gutes Förderverhalten wird dabei durch mehrere die Breitseiten des Kartendurchlaufkanals überragende Transportrollenpaare erzielt, wobei einander benachbarte Transportrollenpaare einen geringeren Abstand voneinander besitzen als die Länge der Magnetkarte. Daher wird die Magnetkarte bei ihrem Durchlauf von mindestens einem Transportrollenpaar erfaßt, so daß Störungen im Durchlauf weitgehend vermieden sind. Es ist verständlich, daß die Transportrollenpaare synchron angetrieben und so gestaltet sind, daß die Magnetkarte mit gleichbleibender Geschwindigkeit durch den Kartendurchlaufkanal gefördert wird.

Damit die Magnetisierungspunkte bzw. Bereiche der Magnetkarte genau zugeordnet werden, ist eine im Kanalanfangsbereich gelegene, den Schmalrand der Magnetkarte abtastende Lichtschranke und ein die Transportrollenpaare antreibender, mit Winkelmeßgeber ausgestatteter Taktmotor vorgesehen. Sobald der Schmalrand der Magnetkarte von der Lichtschranke registriert wird, erhält die Elekronik einen entsprechenden Impuls. Die Motordrehung wird mittels des Drehwinkelmeßgebers der Elektonik mitgeteilt und von dieser kontrolliert. Während des weiteren Kartendurchlaufes ist der Elektronik immer der jeweilige momentane Kartenstandort bekannt, so daß im richtigen Zeitpunkt und damit auch an der richtigen Stelle durch Erregung der entsprechenden Magnetisierungseinrichtung ein magnetisierter Bereich auf der Magnetkarte erzeugt wird.

Sollte es dennoch einmal zur Asynchronität kommen, werden weitere Lichtschranken zur Nachsynchronisierung eingesetzt derart, daß -in Kartendurchlaufrichtung gesehen- hinter jedem Transportrollenpaar eine weitere Lichtschranke zur Nachsynchronisierung vorgesehen ist.

Zwecks Kontrollierung der Entnahme der codierten Magnetkarte ist eine im Bereich des Kanalendes gelegene, das Herausziehen der Magnetkarte aus dem Kartendurchlaufkanal registrierende letzte Lichtschranke vorgesehen.

Der Einsatzbereich der Codiervorrichtung ist durch einen dem Kartendurchlaufkanal zugeordneten Strichcodeleser für einen auf der Breitseite der Magnetkarte angeordneten Strichcode erhöht. Während der Magnetcode eine Schließungsfunktion erfüllt, hat der Strichcode einen Organisationscharakter. Hierdurch kann z. B. eine Zeitnahme erfolgen, gegebenenfalls zusätzliche Dienstleistungen innerhalb einer Anlage in Anspruch genommen werden, eine Nachgebührberechnung erfolgen oder eine Schrankfreigabe etc. einem Zentralrechner mitgeteilt werden.

Eine Ausgestaltung der Erfindung zeichnet sich aus durch mehrere im Zugangskontrollbereich gelegene, mit dem entsprechenden Magnetcode der Magnetkarten zu betätigende Schließfächer sowie einer bei Kartenausgabe öffnenden bzw. mit der ausgegebenen Karte zu öffnende Eingangssperre eines Magnetkarten-Ausgabeautomaten und einer Ausgangssperre, welcher Magnetkarten-Ausgabeautomat beim Zutritt dem Benutzer eine Magnetkarte des Kartenstapelmagazins ausgibt, die während des Ausgabevorganges mit dem Magnetcode eines freien Schließfaches codiert wird und einen von dem Strichcodeleser während des Ausgabevorganges zu erfassenden Strichcode aufweist, wobei mittels eines Zentralrechners eine Zuordnung von Strichcode und Magnetcode erfolgt und die Ausgangssperre einen Karteneinsteckschlitz zur Auswertung des Strichcodes der zurückgegebenen Magnetkarte aufweist. Ist z. B. eine Badeanstalt mit einem solchen Zugangskontrollsystem ausgestattet, bedeutet dies, daß der Besucher vor Benutzung der Badeanstalt einen Geldbetrag zu entrichten hat, woraufhin der Magnetkarten-Ausgabeautomat eine neu codierte Magnetkarte ausgibt und das Öffnen der Eingangssperre veranlaßt. Die ausgegebene Magnetkarte enthält neben dem Magnetcode einen unveränderlichen Strichcode, welcher während des Kartendurchlaufs, also des Ausgabevorganges von dem Strichcodeleser erfaßt wird. Über den Zentralrechner erfolgt dabei die Zuordnung des Magnetcodes in Form einer auf die Magnetkarte aufzubringenden Magnetcodierung zum Strichcode, beispielsweise derart, daß dem Strichcode "B" das freie Schließfach Nr. 10 zugeordnet wird, d. h. diese Karte erhält für die Schließung des Schlosses des Schließfaches Nr. 10 die entsprechende Magnetcodierung. Die Schließfachnummer kann dem Badegast entweder auf einem Anzeigefeld oder auf einem zusätzlich ausgegebenen Beleg mitgeteilt werden. Mit der mit dem Magnetcode und dem Strichcode versehenen Karte kann nun der Badegast das entsprechende Schließfach aufsuchen, in diesem seine Kleidungsstücke unterbringen und mittels der Magnetkarte das Schließfachschloß betätigen. Dies kann so aufgebaut sein, daß nach Einschieben der Magnetkarte durch deren magnetisierte Bereiche Magnetstifte so verlagert werden, daß sie eine Lochplatte des Schließfachschlosses verlassen. Zusammen mit der Magnetkarte läßt sich dann ein die Magnetstifte tragender Schieber verlagern, was das anschließende Verriegeln oder Öffnen des Schlosses zuläßt. Die Magnetkarte bleibt beim Badegast. Mittels des Strichcodes können innerhalb der Badeanstalt weitere Automaten-Leistungen in Anspruch genommen werden, wie z. B. der Besuch eines Solariums (Öffnen der Zugangstür), die Entgegennahme von Getränken etc.. Dieses wird über eine elektronische Nebenstelle dem Zentralrechner des Ausgabeautomaten mitgeteilt. Beim Verlassen der Badeanstalt ist dann die Magnetkarte in den Karteneinsteckschlitz einzuführen zwecks Auswertung des Strichcodes. Der Zentralrechner registriert dabei, daß das dem Strichcode "B" zugeordnete Schließfach Nr. 10 wieder freigeworden ist. Das Fach Nr. 10 kann also wieder neu vergeben werden. Ferner erfolgt eine Überprüfung der Benutzungszeit und der etwaigen Dienstleistungen. Je nach Inanspruchnahme von Dienstleistungen und Einhaltung der Badezeit erfolgt entweder die Aufforderung, einen Geldbetrag nachzuentrichten oder eine Rückgabe eines unverbrauchten Geldbetrages. Erst anschließend öffnet dann die Ausgangssperre.

Für eine Wiederverwertung der Karten ist eine Magnetcodelöscheinrichtung vorgesehen, die den Magnetcode der zurückgegebenen Magnetkarte löscht, bevor diese dem Kartenstapelmagazin zugeführt wird. Eine einzige Magnetkarte kann daher den vorbeschriebenen Zyklus vielmals durchlaufen.

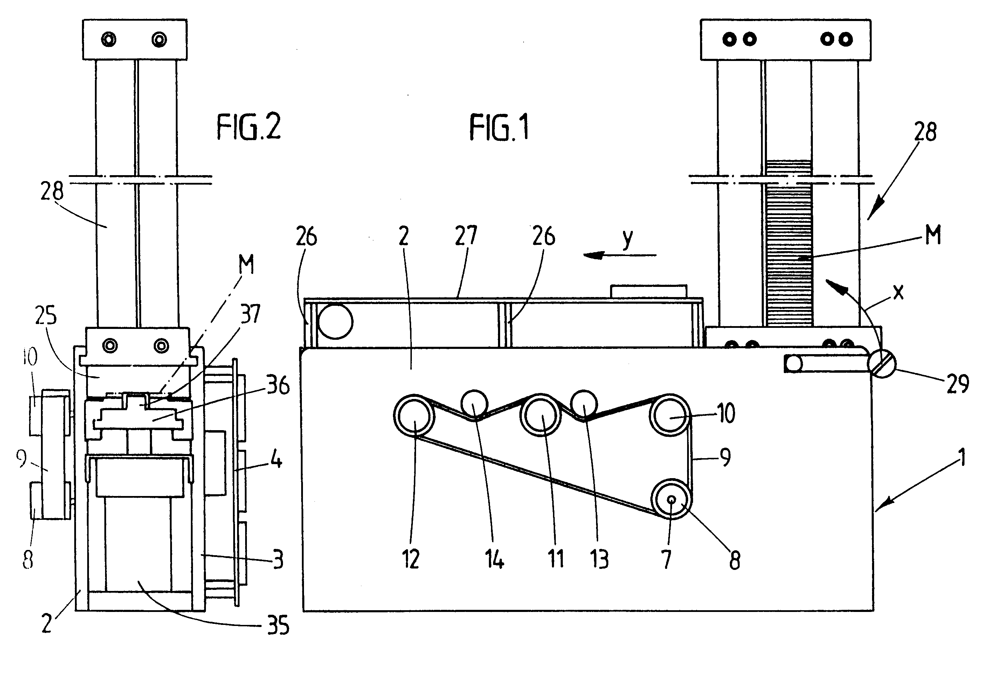

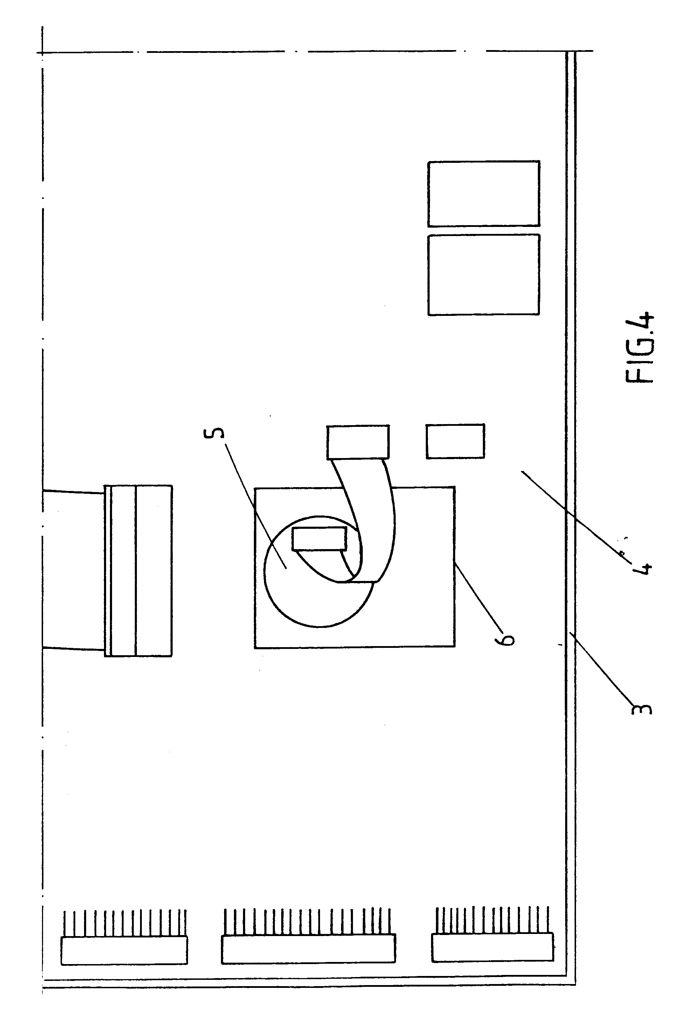

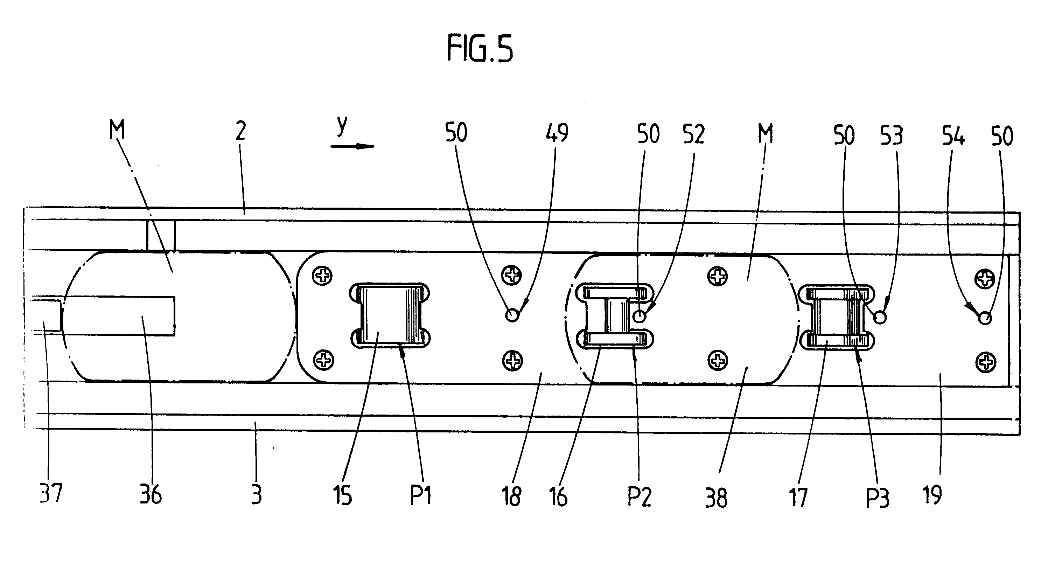

Nachstehend wird ein Ausführungsbeispiel der Erfindung anhand der Figuren 1 bis 8 erläutert. Es zeigt:
- Fig. 1: eine Ansicht einer mit einem Stapelmagazin ausgestatteten Codiervorrichtung,
- Fig. 2: die klappfigurliche Seitenansicht der Fig. 1,
- Fig. 3: einen Längsschnitt durch die wesentlichen Bauteile der Codiervorrichtung,
- Fig. 4: eine teilweise Ansicht der Codiervorrichtung von der Seite, die der in Fig. 1 dargestellten Seite gegenüberliegt,
- Fig. 5: den Schnitt nach der Linie V-V in Fig. 3,
- Fig. 6: den Schnitt nach der Linie VI-VI in Fig. 3,
- Fig. 7: in vergrößerter Darstellung einen Schnitt im Bereich einer Magnetisierungseinrichtung,
- Fig. 8: ein Magnetisierungsschema im Grundriß, Skizze ü das Schema eines Zugangskontrollsystems,
- Fig. 9: eine Draufsicht auf eine aus Schloß und Schlüsselkarte bestehende Schließeinrichtung,
- Fig. 10: eine Schlüsselkarte in aufgebrochener Darstellung,
- Fig. 11: eine Rückansicht des Schlosses bei nicht eingeschobenem Kupplungselement und
- Fig. 12: eine Seitenansicht der Darstellung gemäß Fig. 11, jedoch mit eingeschobenem Kupplungselement.

Die als Ganzes mit der Ziffer 1 bezeichnete Codiervorrichtung besitzt zwei mit parallelem Abstand zueinander angeordnete, lotrecht ausgerichtete Wangen 2,3. Die eine Wange 3 ist Träger einer elektronische Bauteile enthaltenden Schaltplatte 4 nebst Steckeranschlüssen. Diese Einheit kann in einen nicht veranschaulichten Magnetkarten-Ausgabeautomaten eingesetzt werden.

Zwischen den Wangen 2,3 ist ein nicht veranschaulichter, mit der Elektronik zusammenwirkender Taktmotor untergebracht. Dessen Winkelmeßgeber 5 ist durch ein Fenster 6 der Schaltplatte 4 ersichtlich. Auf der die Wange 2 durchsetzenden Motorwelle 7 sitzt eine verzahnte Riemenscheibe 8. Um letztere ist ein Zahnriemen 9 gelegt, welcher drei hintereinander, auf gleicher Höhe angeordnete Riemenscheiben 10,11,12 antreibt. Den Riemenabschnitten zwischen den Riemenscheiben 10,11,12 sind Spannrollen 13,14 zugeordnet.

Von den Riemenscheiben 10,11,12 werden die unteren Transportrollen 15,16,17 dreier hintereinander liegend angeordneter Transportrollenpaare P1,P2 und P3 angetrieben. Die Transportrollen 15,16,17 überragen die ihnen zugekehrte untere Breitseite 18 eines sich zwischen den Wangen 2,3 befindlichen Kartendurchlaufkanals 19. In Gegenüberlage zu den Transportrollen 15,16,17 sind durchmesserkleinere Transportrollen 20,21,22 der Transportrollenpaare vorgesehen. Auch diese überragen die ihnen zugekehrte, und zwar obere Breitseite 23 des Kartendurchlaufkanals 19. Diese Transportrollen 20 bis 22 sind nicht angetrieben. Ihre Achsen sind in Vertikalführungen vorgesehen.

Zur Bildung des Kartendurchlaufkanals dient eine im oberen Bereich zwischen den Wangen 2,3 festgelegte untere Schienenführung 24 sowie eine dieser zugeordnete Deckschiene 25. Letztere ist vorzugsweise auswechselbar gestaltet. Oberhalb der Deckschiene 25 erstreckt sich nicht über die gesamte Länge der Wangen 2,3 eine von Distanzhaltern 26 getragene, elektronische Bauteile aufnehmende Platte 27. Im Anschluß an die Platte 27 ist der Codiervorrichtung 1 ein Kartenstapelmagazin 28 zugeordnet. Letzteres ist abnehmbar gestaltet. Um das Kartenstapelmagazin 28 abnehmen und durch ein neues ersetzen zu können, muß zuvor eine Haltevorrichtung 29 durch Verschwenken in Pfeilrichtung x in eine Freigabestellung gebracht werden. In dem Kartenstapelmagazin 28 sind Magnetkarten M in Übereinanderlage vorgesehen derart, daß die unteren Karten im Bereich des Kanalanfanges 30 liegen. Damit die jeweils unterste Magnetkarte M in den Kartenkanal 19 eingeschoben werden kann, besitzt die Deckschiene 25 auf Höhe des Kartenstapelmagazins 28 eine Öffnung 31.

Innerhalb der Deckschiene 25 erstrecken sich die oberen Transportrollen 20,21,22, während die unteren Transportrollen 15,16,17 innerhalb der Schienenführung 24 in entsprechenden Aussparungen 32,33,34 angordnet sind. Im übrigen besitzen einander benachbarte Transportrollenpaare P1,P2,P3 einen geringeren Abstand voneinander als die Länge der Magnetkarte M. Bei ihrem Durchlauf wird daher die Magnetkarte M von mindestens einem Transportrollenpaar in Kartendurchlaufrichtung y gefördert.

Ein zwischen den Wangen 2,3 am einlaufseitigen Ende des Kartendurchlaufkanals 19 befindlicher Elektromotor 35 betätigt einen hin- u. zurückbewegbaren Schieber 36, dessen in der Längsmittelebene des Kartendurchlaufkanals 19 liegende Nase 37 die unterste Karte M des Kartenstapels in den Kartendurchlaufkanal 19 hineinbewegt derart, daß das erste Transportrollenpaar P1 dann die Magnetkarte M erfaßt und diese reibungsschlüssig weiter fördert. Zwecks Erzielung eines Reibschlusses ist der Abstand zwischen den einzelnen Transportrollen eines Transportrollenpaares kleiner als die Dicke der Magnetkarte M.

Die Magnetkarte M kann einen Kunststoffträger umfassen, der zur Aufnahme einer magnetisierbaren Bariumferritschicht dient, welch letztere von einer Folie abgedeckt ist. Sodann kann die Magnetkarte noch einen quer zu ihrer Durchlaufrichtung angeordneten Strichcode besitzen.

Die Breitseite 18 des Kartendurchlaufkanals 19 ist von einer aus ferromagnetischem Material bestehenden Kanalwandung 38 gebildet, welch letztere Teil der Schienenführung 24 ist.

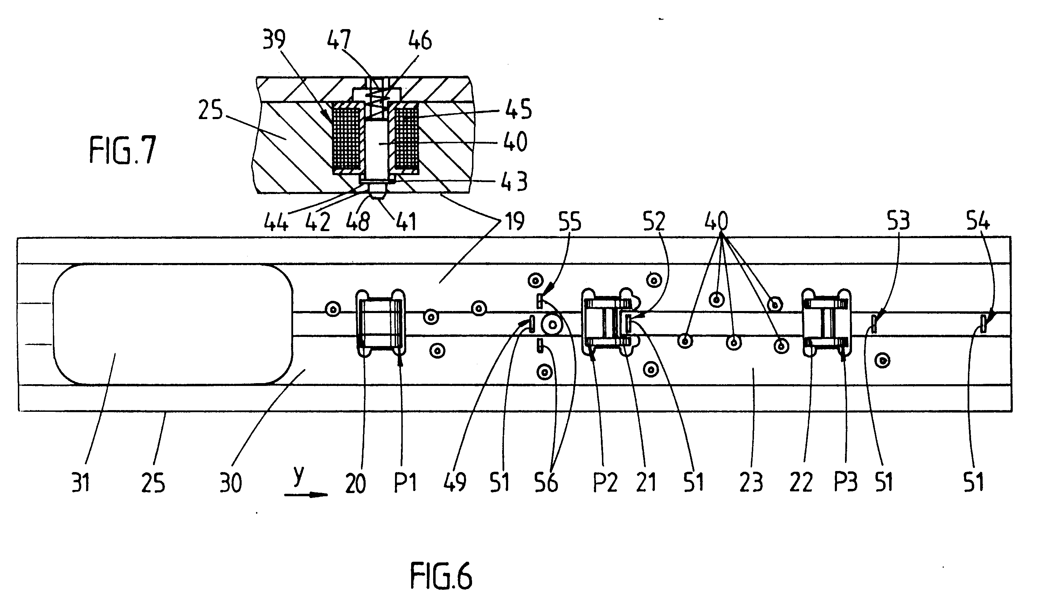

An der gegenüberliegenden Breitseite 23 des Kartendurchlaufkanals 19 sind dagegen Magnetisierungseinrichtungen 39 vorgesehen. Sie erstrecken sich demgemäß in der Deckschiene 25. Es liegt eine solche Anordnung der Magnetisierungseinrichtungen 39 vor, daß ihre Magnetisierungsstifte 40 auf vom Längsrand des Kartendurchlaufkanals 19 im unterschiedlichen Abstand angordneten Kanallängsspuren liegen. Ferner sind die Magnetisierungsstifte 40 in Spurlängsrichtung versetzt hintereinander angeordnet, so daß eine günstige Unterbringung der Magnetisierungseinrichtungen 39 gegeben ist. Jeder Magnetisierungsstift 40 ragt mit seiner Stirnfläche 41 in den Kartendurchlaufkanal 19 hinein und ist in einer Kanalquerbohrung 42 verschieblich geführt. Wie insbesondere Fig. 7 veranschaulicht, besitzt jeder Magnetisierungsstift 40 eine seinen Eintrittsweg in den Kartendurchlaufkanal 19 begrenzende, von einem Ringkragen gebildete Stufe 43, die mit einer Gegenschulter 44 der Kanalquerbohrung 42 zusammenwirkt. Jenseits der Stufe 43 führt sich der Magnetisierungsstift in einer in die Deckschiene 25 eingelassenen Erregerspule 45, um sich endseitig in einen querschnittskleineren Zapfen 46 fortzusetzen. Dieser durchgreift eine Druckfeder 47, die den Magnetisierungsstift 40 in Kanalrichtung federbelastet, welche Bewegung durch die Stufe 43 und die Gegenschulter 44 begrenzt wird.

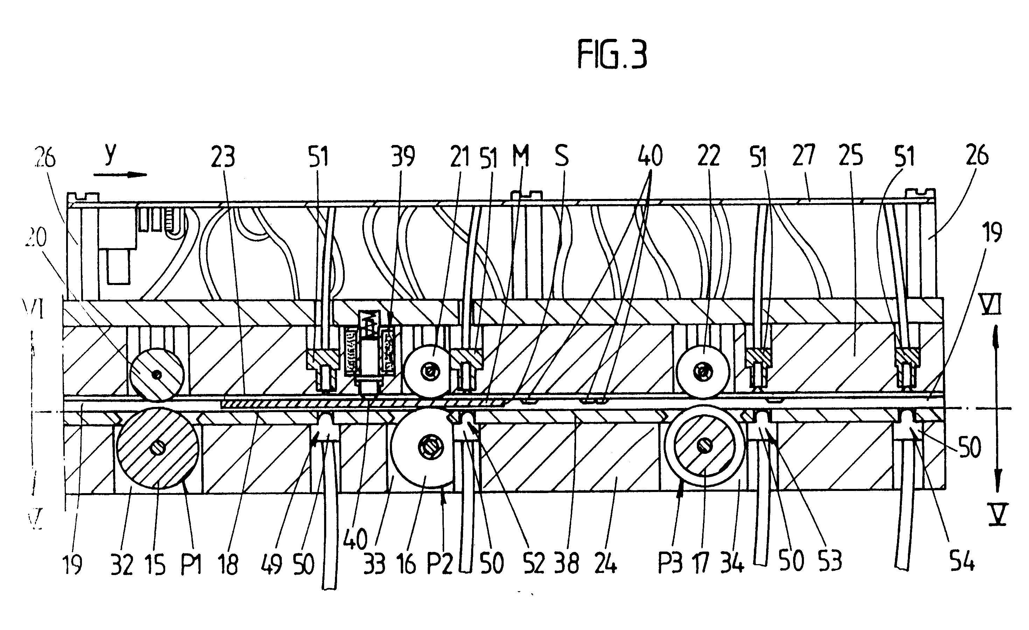

Die Figuren 3 und 7 veranschaulichen ferner, daß der Magnetisierungsstift 40 mit einer seiner Stirnfläche 41 vorgeordneten, in Form einer Kegelstumpffläche gestalteten Auflaufschräge 48 versehen ist. Um die Höhe dieser Auflaufschräge 48 ragt der Magnetisierungsstift 40 in den Kanal 19 hinein.

Zwischen den beiden dem Kanalanfangsbereich benachbarten Transportrollenpaaren P1 und P2 ist eine den Schmalrand S der Magnetkarte M abtastende Lichtschranke 49 vorgesehen. Dieselbe befindet sich in der Längsmitte des Kartendurchlaufkanals und besteht aus einem in der Schienenführung 24 festgelegten Sender 50 und einem in der Deckschiene 25 angebrachten Empfänger 51. Vorgenannte Lichtschranke 49 erstreckt sich hinter dem ersten Transportrollenpaar P1. Den anderen Transportrollenpaaren P2,P3 sind ebenfalls aus Sender 50 und Empfänger 51 bestehende weitere Lichtschranken 52 und 53 nachgeordnet. Es sind dies die zweite und dritte Lichtschranke. Zufolge entsprechender Querschnittsgestaltung des zweiten Transportrollenpaares P2 kann die Lichtschranke 52 sogar innerhalb der Abmessungen dieses Transportrollenpaares liegen. Die dritte Lichtschranke 53 erstreckt sich ganz nahe hinter dem Transportrollenpaar P3, und zwar in Kartendurchlaufrichtung y gesehen.

Vorgenannte Lichtschranken 52,53 dienen zur Nachsynchronisation, falls beim Transport der Magnetkarte M diese einem Schlupf unterliegen sollte. Von der zweiten und dritten Lichtschranke 52,53 erfolgt ebenfalls eine Abtastung des Kartenschmalrandes S, so daß die jeweilige Lage der Magnetkarte beim Durchlauf geortet ist. Demgemäß erhalten die entsprechenden Magnetisierungseinrichtungen im richtigen Moment Stromzufluß, um die Magnetisierungspunkte bzw. Bereiche auf der Magnetkarte M zu erzeugen.

Schließlich ist noch eine im Bereich des Kanalendes gelegene letzte Lichtschranke 54 vorgesehen, die sich ebenfalls aus einem Sender 50 und einem Empfänger 51 zusammensetzt. Die Aufgabe dieser Lichtschranke 54 ist es, das Herausziehen der Magnetkarte M aus dem Kartendurchlaufkanal zu registrieren.

Weitere Bestandteile der Codierungsvorrichtung 1 sind ein dem Kartendurchlaufkanal zugeordneter Strichcodeleser 55, welcher beiderseits der Kanallängsmitte angeordnete Leseköpfe 56 ausbildet. Diese erstrecken sich beim Ausführungsbeispiel beiderseits des Empfängers 51 der ersten Lichtschranke 49.

Die Codiervorrichtung arbeitet wie folgt: Ist die Codiervorrichtung einem Zugangskontrollsystem einer Badeanstalt zuge-ordnet, so hat der Badegast an einem nicht dargestellten Magnetkarten-Ausgabeautomaten eine Gebühr zu entrichten, was beispielsweise durch Geldeinwurf geschehen kann. Hierdurch wird die Codiervorrichtung eingeschaltet dahingehend, daß der Elektromotor 35 den Schieber 36 antreibt, welch letzterer mit seiner Nase 37 die zuunterstliegende Magnetkarte M des Kartenstapels in den Bereich des ersten angetriebenen Transportrollenpaares P1 vorbewegt. Durch dieses wird die Magnetkarte M, die zwar einen Strichcode, jedoch noch keinen Magnetcode enthält, weitergefördert. Sobald der Kartenschmalrand S in den Bereich der ersten Lichtschranke 49 gelangt, wird die Motordrehung mittels des Drehwinkelmeßgebers 5 von der Elektronik kontrolliert. Das bedeutet, daß die jeweilige Lage der Magnetkarte im Kartendurchlaufkanal 19 bekannt ist. Daher kann mittels der Magnetisierungseinrichtungen 39 an der vorbestimmten Stelle die Magnetisierung der Magnetkarte erfolgen. Durch die weiteren Lichtschranken 52,53 ist eine Nachsynchronisierung vornehmbar, falls ein Schlupf während des Kartendurchlaufes auftreten sollte. Es ist bei einem Kartendurchlauf durchaus möglich, daß mittels einer einzigen Magnetisierungseinrichtung 39 auf einer Kanallängsspur mehrere Magnetisierungsbereiche erzeugt werden.

Während des Magetkartendurchlaufes wird von dem Strichcodeleser 55 der Strichcode erfaßt und dem Zentralrechner mitgeteilt, durch welchen eine Zuordnung von Strichcode und Magnetcode erfolgt derart, daß ausschließlich für ein unbenutztes Schließfach ein Magnetcode auf der Magnetkarte erzeugt wird. Es kann daher niemals geschehen, daß innerhalb eines Benutzungszeitraumes zwei identisch codierte Magnetkarten ausgegeben werden. Der zum entsprechenden Schloß des Schließfaches erzeugte Magnetcode der Magnetkarte dient dann zum Schließen des Schlosses. Es ist noch zu erwähnen, daß bei einer erneuten Ausgabe ein und derselben, mit Strichcode versehenen Magnetkarte dieser eine andere Schranknummer bzw. Schließfachnummer zugeordnet werden kann verbunden mit einer entsprechenden Magnetcodierung.

Nach Benutzung der Badeanstalt und der darin befindlichen Einrichtungen ist die Magnetkarte in den Karteneinsteckschlitz einer Ausgangssperre einzuführen, so daß dann die Auswertung der Magnetkarte erfolgt. Dadurch wird dem Zentralrechner die Information gegeben, daß das zuvor benutzte Schließfach frei ist, um dieses erneut vergeben zu können.

Der Strichcodeleser 55 ist so aufgebaut, daß die Magnetkarte in beiden Richtungen den Kartendurchlaufkanal 19 durchlaufen kann, und zwar sowohl vom Stapelmagazin als auch vom Ausgabeschlitz aus. Es erfolgt dabei ein entsprechender Antrieb der Transportrollen. Auf diese Weise ist es möglich, die Daten einer Karte abzufragen. Dieses kann nur in einer speziellen Betriebsart der Vorrichtrung erfolgen, die von einer autorisierten Person eingeschaltet werden kann. Hat z. B. der Badegast vergessen, welchen Schrank er belegt hat, so kann in dieser Betriebsart die Karte in den Ausgabeschlitz der Codiervorrichtung eingeschoben und der Strichcode abgelesen werden. Über eine Anzeige oder einen Ausdruck sind dann im Zusammenhang mit dem Zentralrechner Daten über die Benutzungszeit, Schranknummer usw. erkennbar.

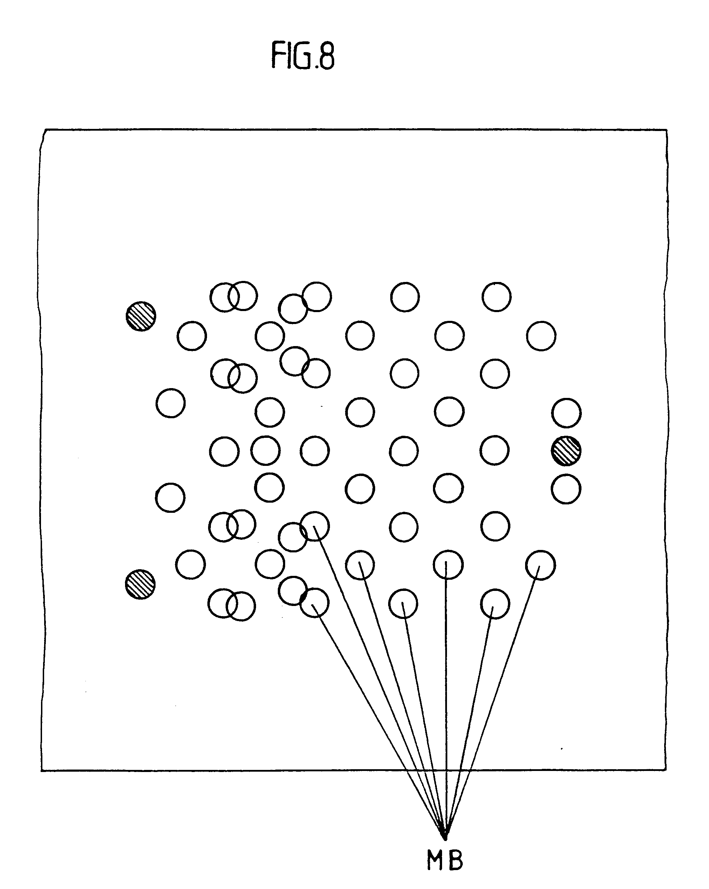

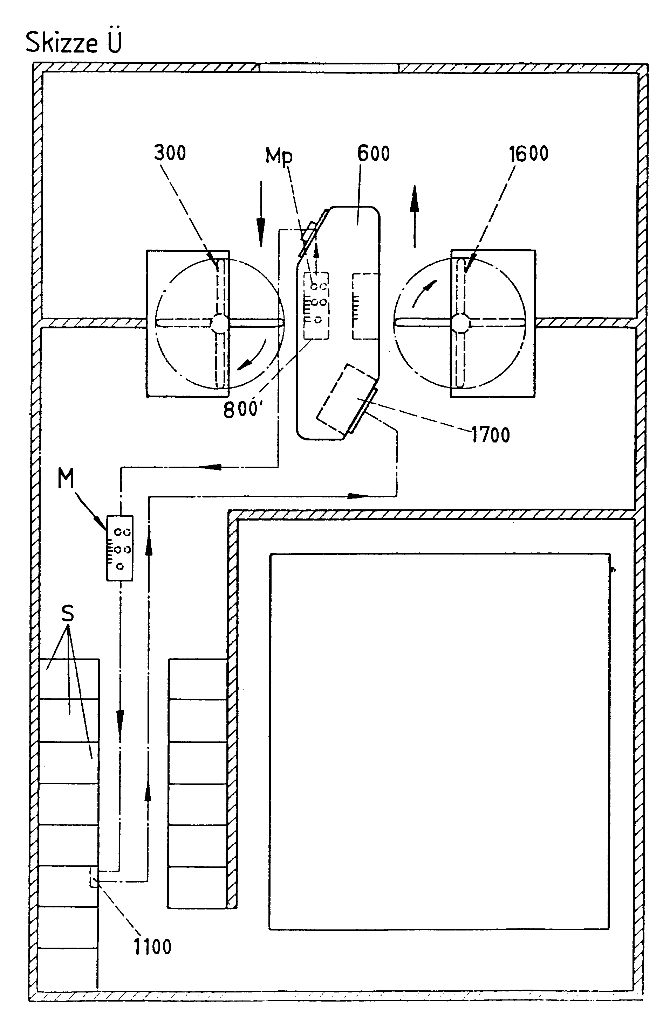

Das in Fig. 8 veranschaulichte Magnetisierungsschema verdeutlicht, daß ein engmaschiges Raster von Magnetisierungsbereichen MB geschaffen ist, verbunden mit einer großen Variationsmöglichkeit hinsichtlich der verschiedenartigen Magnetcodierungen. Es wird pro Karte immer nur ein bestimmter Anteil der in der Fig. 8 wiedergegebenen Magnetisierungsbereiche MB für die Kartencodierung magnetisiert.

Die erfindungsgemäße Codiervorrichtung kann auch lediglich dazu verwendet werden, Magnetkarten für entsprechende Magnetschlösser zu codieren. Die Verwendung in einem Zugangskontrollsystem stellt somit ein weiteres Einsatzfeld dar.

Die Skizze Ü zeigt das Schema eines Zugangskontrollsystems: Das Gerät 66 gibt Schlüsselkarten M aus; diese sind bereichsweise magnetisiert, etwa 30 bis 50 Bereiche MP. Nach codierter Ausgabe öffnet die Eingangssperre 300. Der Benutzer geht zu dem Schließfach S oder dergleichen, dessen Schloß 1100 mit seinen Magnetstiften einen Schließcode verkörpert, der demjenigen entspricht, der auf einen Teil der Bereiche MP aufmagnetisiert ist. Die als Ergänzungscode magnetisierten Bereiche werden von den Magnetstiften des Schlosses 1100 nicht angesprochen. Der Ergänzungscode wird in der Ausgangssperre 1700 ausgewertet, sei allein oder gemischt mit dem Schließcode, und zwar zur Identifikation der Schlüsselkarte und/oder zur Erfassung von Zusatz-Berechnungen über in einem Schwimmbad oder dergleichen in Anspruch genommene Leistungen.

Die Abfragung und Wirkungsweise der Schlüsselkarte M im Schloß erfolgt in bekannter Form (siehe z.B. ältere EP-OS 87 11 852.4) und sei nur kurz umschrieben mit Bezug auf die Ergänzungsfiguren 9-12 :

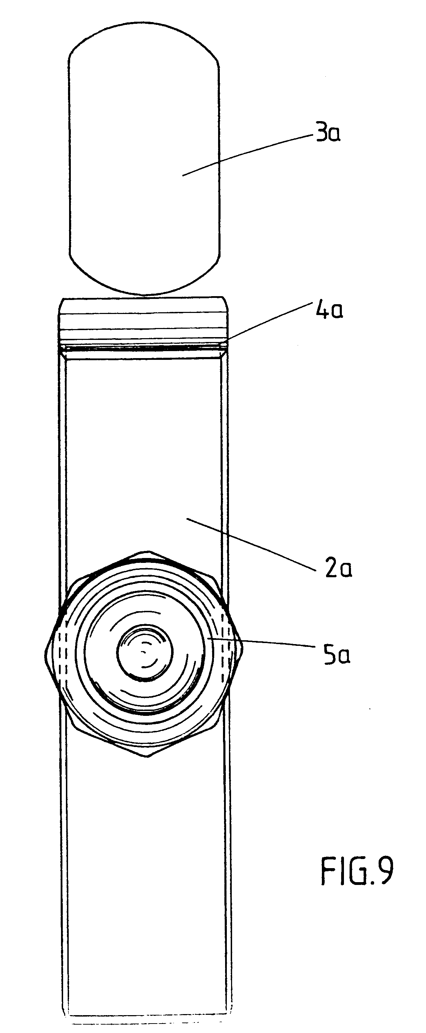

Die Schließeinrichtung gemäß Fig. 9 besteht aus einem Schloß 2a und mindestens einer Schlüsselkarte 3a. Das Gehäuse des Schlosses 2a ist mit einem Einsteckschacht 4a versehen, in den die Schlüsselkarte 3a zur Freigabe des Schließmechanismus' einzuführen ist. Sofern die Schlüsselkarte 3a eine gültige Codierung aufweist, erfolgt eine Kupplung einer Riegelbetätigungswelle mit einem Betätigungsknopf 5a, so daß eine Riegelverlagerung erfolgen kann.

Derartige Schlösser 2a werden mit einer Vielzahl von Schlüsselkarten 3a betrieben, wobei die einzelnen Schlüsselkarten 3a jeweils zugangsberechtigten Personen ausgehändigt sind, so daß nur diese Personen Zugang zu einem mit dem Schloß 2a abgesperrten Kontrollbereich oder dergleichen haben. Dabei ist vorgesehen, daß das Schloß 2a im Bereich seines Einsteckschachtes 4a einen Kartenleser 6a aufweist, der zumindest einen Teil des Schlüsselkartencodes 7a erfaßt, wodurch neben einer Schließberechtigungsprüfung die Möglichkeit besteht, Schlüsselkartendaten in einen Speicher 7a' einer Schloßelektronik 8a zu übertragen. In dem Speicher 7a' sind dann spezielle Informationen über die Schlüsselnummer, die Anlagennummer, das Datum und die Uhrzeit einer Schließung, die Durchführung eines Schließvorganges (ob lediglich die Schlüsselkarte eingeschoben wurde oder ob auch der Schloßmechanismus bewegt wurde) und Werte darüber gespeichert, ob Fehlfunktionen vorgelegen haben. Möglich ist die Speicherung einer gewünschten Anzahl von zuvor durchgeführten Schließungen, wobei der Speicherinhalt immer aktualisiert wird, indem die ältesten Daten von den jüngsten überschrieben werden.

Um Zugriff zu abgespeicherten Daten zu erhalten, muß eine Verbindung zwischen dem Schloß 2a und einem entsprechenden Protokolliergerät geschaffen werden. Dieses Protokolliergerät ist vorzugsweise als mobiler Drucker ausgebildet. Mittels eines Kupplungselementes, das in den Einsteckschacht 4a des Schlosses 2a eingeschoben wird, läßt sich zwischen der Schloßelektronik 8a und dem eingesetzten Drucker eine Datenübertragungsstrecke schaffen, so daß man sich von dem Drucker die gewünschten Informationen auflisten lassen kann.

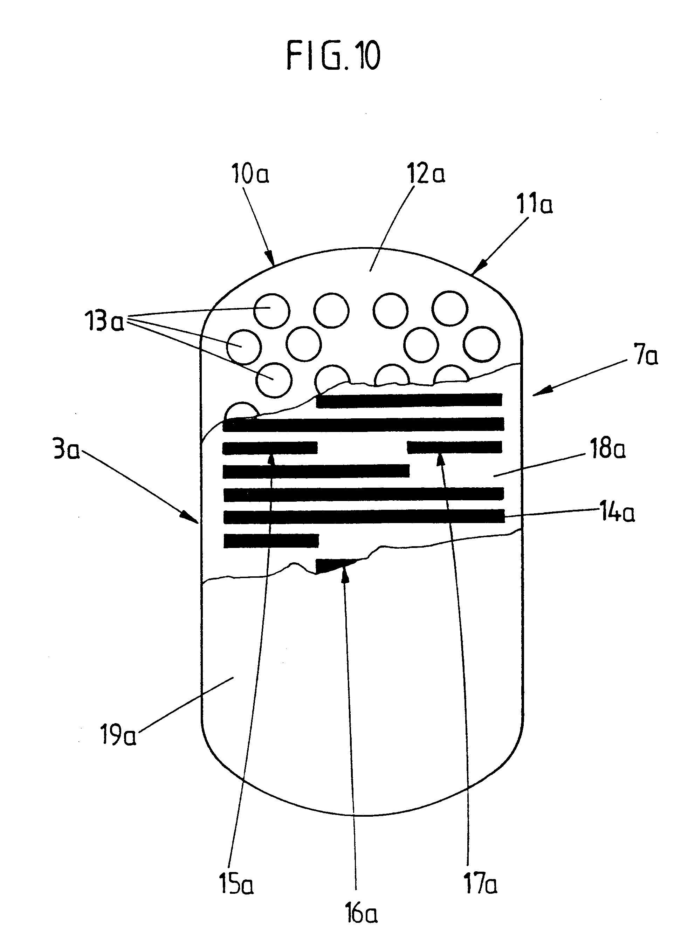

Die Fig. 10 zeigt - in aufgebrochener Darstellung - den Aufbau der Schlüsselkarte 3a, der sich im wesentlichen aus zwei Komponenten zusammensetzt. Die eine Komponente ist das Trägermaterial 10a der Schlüsselkarte 3a, das vorzugsweise aus einem geeigneten Kunststoff besteht. Die zweite Komponente ist von einem Codierungssubstrat 11a gebildet, das auf dem Trägermaterial aufgebracht ist und die Individualisierung der Schlüsselkarte 3a ermöglicht.

Auf das aus Kunststoff bestehende, kartenförmige Trägermaterial 10a der Schlüsselkarte 3a ist eine Bariumferrit-Beschichtung 12a aufgebracht, welche mittels einer nicht dargestellten Einrichtung magnetisiert ist, so daß sich magnetische, mit Nord- und Südpol versehene Bereiche 13a ausbilden lassen. Diese magnetisierten Bereiche 13a weisen einen permanenten Magnetismus auf und bilden einen Teil des Schlüsselkartencodes 7a. Oberhalb der Bariumferrit-Beschichtung 12a ist ein Strichcode 14a als Ergänzungscode angeordnet, der vorzugsweise aus drei parallel zueinander verlaufenden Spuren 15a, 16a und 17a besteht. Der Strichcode 14a weist gleichmäßig breite Striche auf, welche in Spurlängsrichtung gesehen, einen gleichmäßigen Abstand voneinander besitzen, sofern nicht zwischen ihnen Leerstellen 18a ausgebildet sind.

Anstelle des Strichcodes können auch solche Bereiche MP der Schlüsselkarte durch Magnetisierung den Ergänzungscode verkörpern, die für den Schließcode des Schlosses 1100 nicht gebraucht wurden.

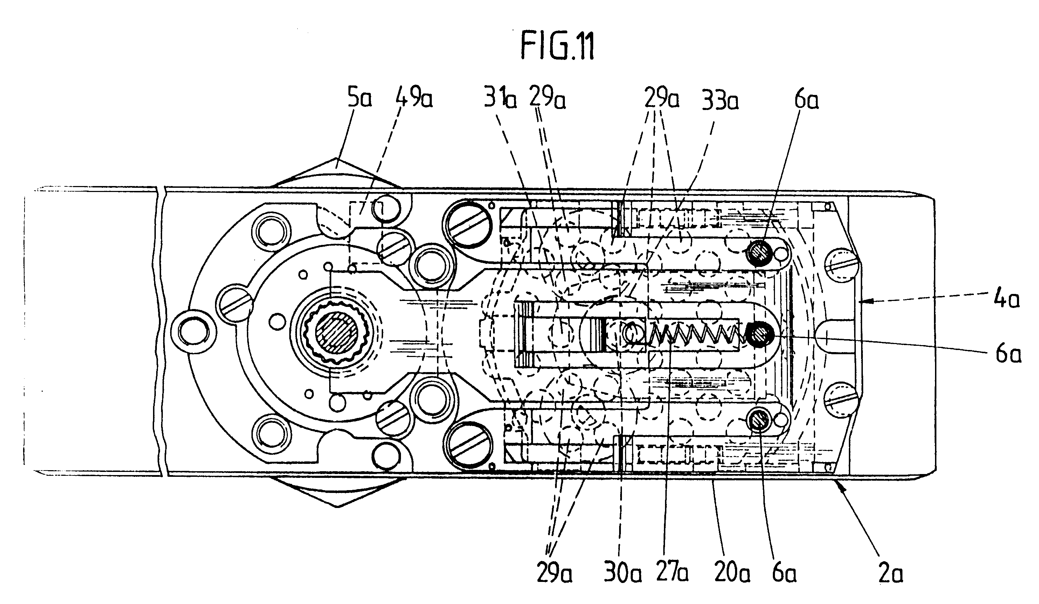

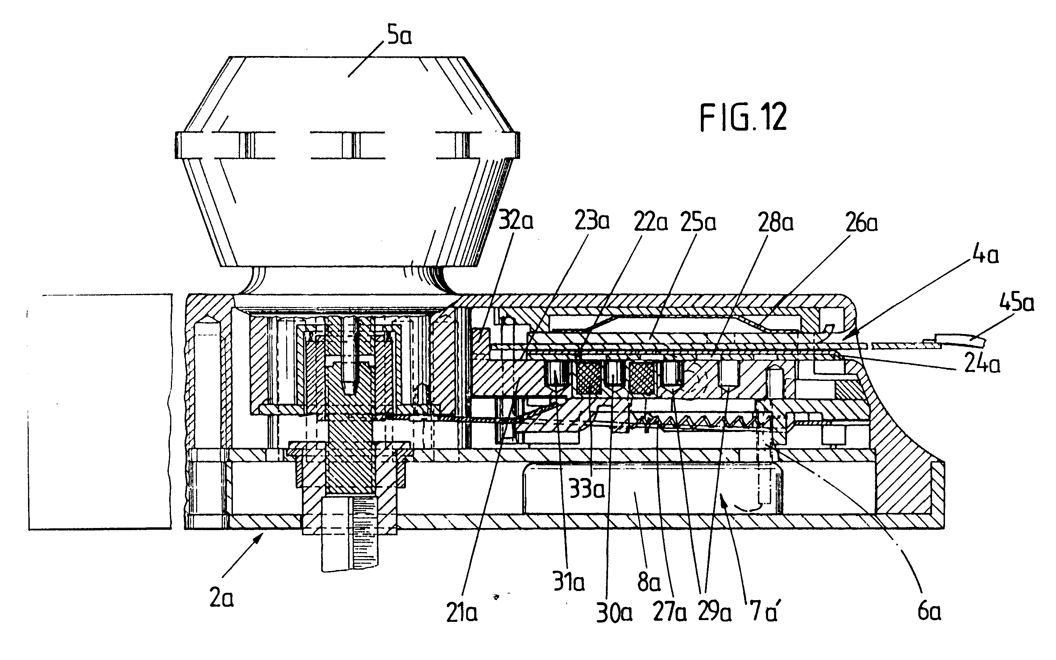

Die Figuren 11 + 12 zeigen wesentliche Komponenten des Schloßaufbaues. Das Schloß 2a besitzt ein Schloßgehäuse 20a, in dem ein Schieber 21a längsverschieblich geführt ist, der auf einer schloßgehäusefesten Lochplatte 22a mit seiner Gleitfläche 23a aufliegt. Die andere Seite der Lochplatte 22a wird von einer Abdeckplatte 24a überfangen, die die eine Wandung des Einsteckschachtes 4a bildet. Die zweite Wandung des Einsteckschachtes 4a wird von einer Ankerplatte 25a aus ferromagnetischem Material gebildet, welche von einer Feder 26a auf die Abdeckplatte 24a gedrückt wird. Der Schieber 21a wird mittels einer Spiralzugfeder 27a in Grundstellung (Stellung gemäß Fig. 11) gehalten. In dieser Grundstellung liegen den Löchern 28a der Lochplatte 22a Lagerausnehmungen 29a fluchtend gegenüber, in denen als Magnetstifte 30a ausgebildete Zuhaltungen 31a längsverschieblich einliegen. Am unteren Ende des Einsteckschachtes 4a besitzt der Schieber 21a einen Vorsprung 32a, gegen den der mittlere Bereich einer in den Einsteckschacht 4a eingeschobenen Schlüsselkarte 3a bzw. eines eingeschobenen Kupplungselementes treten kann. Mindestens eine der Lagerausnehmungen 29a des Schiebers 22a ist von einer Magnetspule 33a umgeben. Die Magnetspule 33a ist an die Schloßelektronik 8a angeschlossen. Ferner ragt der Kartenleser 6a bis in den Bereich des Einsteckschachtes 4a und steht mittels einer Kabelverbindung ebenfalls mit der Schloßelektronik 8a in Verbindung.

Wird nun eine Schlüsselkarte 3a bzw. ein Kupplungselement (zur Druckerabfragung) mit gültigem Schlüsselkartencode in den Einsteckschacht 4a des Schlosses 2a eingeschoben, so tritt zunächst der untere Kartenrand gegen den Vorsprung 32a des Schiebers 21a. In dieser Stellung treten die schließcode-magnetisierten Bereiche 13a der Schlüsselkarte 3a bzw. des Kupplungselements in Gegenüberlage zu den Magnetstiften 30a, die zuvor von der Ankerplatte 25a angezogen wurden und demgemäß in den Löchern 28a der Lochplatte 22a mit einem Teilbereich und mit einem anderen Teilbereich in den Lagerausnehmungen 29a des Schiebers 21a einlagen. Diese Schieberfesselung wird dadurch aufgelöst, daß die magnetisierten Bereiche 13a mit gleichnamigen Polen den Magnetstiften 30a gegenübertreten, so daß diese vollständig in die Lagerausnehmungen 29a hineingedrückt werden und demgemäß die Löcher 28a der Lochplatte 22a freigeben. Der von der Magnetspule 33a umgebene Magnetstift 30a wird nicht durch einen magnetisierten Bereich 13a in Freigabestellung bewegt, sondern aufgrund einer Erregung der Magnetspule 33a verlagert. Dieses erfolgt dadurch, daß der Kartenleser 6a den Strichcode 14a - oder zumindest einen Teil davon - abfragt und die gelesenen Informationen mit Informationen des Speichers 7a′ der Schloßelektronik 8a vergleicht. Liegt Übereinstimmung vor, so wird die Magnetspule 33a erregt und die entsprechende Zuhaltung 31a verlagert. Insgesamt ist somit der Schieber 21a freigegeben und kann durch weiteres Einschieben der Schlüsselkarte 3a bzw. des Kupplungselementes in die Stellung gemäß der Fig. 12 verbracht werden, in der - im Falle einer Schlüsselkarte 3a- über eine hier nicht näher zu beschreibende Mechanik eine Riegelverlagerung des Schlosses 2a durch Betätigung des Betätigungsknopfes 5a möglich ist.

Wird der Ergänzungscode nicht von einem Strichcode, sondern von einer Magnetisierung solcher Bereiche MP gebildet, die für den Schließcode nicht gebraucht wurden, was den Vorteil einer einheitlichen Codierungstechnik bringt, so wird mit der zugehörigen Leseeinrichtung dieser Code erfaßt.

## Patentansprüche

1. Kodiervorrichtung für Magnetkarten, mit mindestens einer gegen die Oberfläche der zu magnetisierenden Karte (M)tretenden Magnetisierungseinrichtung, welche einen längsverschieblichen Magnetisierungsstift (40) und eine diesen umgebende Erregerspule (45) aufweist sowie mit einer elektrischen Steuereinrichtung für die Erregerspule, wobei der sich zur Stirnseite hin verjüngende Magnetisierungsstift (40) an einer Breitseite (23) eines Kartendurchlaufkanals (19) angeordnet und aufgrund seiner Längsverschieblichkeit mit seiner Stirnseite (41) in Berührung zur Karte bringbar ist, dadurch gekennzeichnet, daß der Magnetisierungsstift (40) in einer senkrecht zum Kartendurchlaufkanal (19) angeordneten Kanalquerbohrung (42) unter Federvorspannung angeordnet ist und die als Auflaufschräge wirkende Verjüngung des Magnetisierungsstiftes (40) um ihre Höhe in den Kartendurchlaufkanal hineinragt.

2. Codiervorrichtung nach Anspruch 1, gekennzeichnet durch mehrere Magnetisierungseinrichtungen (39), deren Magnetstifte (40) auf vom Längsrand des Kartendurchlaufkanals (19) im unterschiedlichen Abstand angeordneten Kanallängsspuren liegen.

3. Codiervorrichtung nach einem oder mehreren der vorhergehenden Ansprüche, dadurch gekennzeichnet, daß die Magnetisierungsstifte (40) in Spurlängsrichtung versetzt zueinanderliegen.

4. Codiervorrichtung nach einem oder mehreren der vorhergehenden Ansprüche, dadurch gekennzeichnet, daß jeder Magnetisierungsstift (40) eine seinen Eintrittsweg in den Kartendurchlaufkanal (19) begrenzende, mit einer entsprechenden Gegenschulter (44) der Kanalquerbohrung (42) zusammenwirkende Stufe (43) aufweist.

5. Codiervorrichtung nach einem oder mehreren der vorhergehenden Ansprüche, dadurch gekennzeichnet, daß die andere Breitseite (18) des Kartendurchlaufkanals (19) von einer aus ferromagnetischem Material bestehenden Kanalwandung (38) gebildet ist.

6. Codiervorrichtung nach einem oder mehreren der vorhergehenden Ansprüche, gekennzeichnet durch ein im Bereich des Kanalanfanges (30) angeordnetes Kartenstapelmagazin (28).

7. Codiervorrichtung nach einem oder mehreren der vorhergehenden Ansprüche, gekennzeichnet durch einen die unterste Karte (M) des Kartenstapels in den Kartendurchlaufkanal (19) hineinbewegenden Schieber (36).

8. Codiervorrichtung nach einem oder mehreren der vorhergehenden Ansprüche, gekennzeichnet durch mehrere die Breitseiten (18,23) des Kartendurchlaufkanals (19) überragende Transportrollenpaare (P1,P2,P3), wobei einander benachbarte Transportrollenpaare einen geringeren Abstand voneinander besitzen, als die Länge der Magnetkarte (M).

9. Codiervorrichtung nach einem oder mehreren der vorhergehenden Ansprüche, gekennzeichnet durch eine im Kanalanfangsbereich gelegene, den Schmalrand (S) der Magnetkarte (M) abtastende Lichtschranke (49).

10. Codiervorrichtung nach einem oder mehreren der vorhergehenden Ansprüche, dadurch gekennzeichnet, daß -in Kartendurchlaufrichtung (y) gesehenhinter jedem Transportrollenpaar eine weitere Lichtschranke (52,53) zur Nachsynchronisation vorgesehen ist.

11. Codiervorrichtung nach einem oder mehreren der vorhergehenden Ansprüche, gekennzeichnet durch eine im Bereich des Kanalendes gelegene, das Herausziehen der Magnetkarte (M) aus dem Kartendurchlaufkanal (19) registrierende, letzte Lichtschranke (54).

12. Codiervorrichtung nach einem oder mehreren der vorhergehenden Ansprüche, gekennzeichnet durch einen dem Kartendurchlaufkanal (19) zugeordneten Strichcodeleser (55) für einen auf der Breitseite der Magnetkarte (M) angeordneten Strichcode.

13. Zugangskontrollsystem mit einer Codiervorrichtung nach einem oder mehreren der vorhergehenden Ansprüche, gekennzeichnet durch eine im Kartenausgabebereich erfolgende bereichsweise Magnetisierung der Schlüsselkarte derart, daß zusätzlich zu den auf die Schließung eines Schlosses abgestimmten Magnetisierungsbereichen weitere Bereiche als identifizierender Ergänzungscode magnetisiert sind, welche Bereiche nicht an der Schließung des Schlosses beteiligt sind und im Bereich einer die Schlüsselkarte nach Gebrauch auswertenden Ausgangssperre von einer Leseeinrichtung erfaßt sind zwecks alleiniger oder in Kombination mit der über Schließcode-Magnetisierung erfolgenden Auswertung.

14. Zugangskontrollsystem mit einer Codiervorrichtung nach einem oder mehreren der vorhergehenden Ansprüche, gekennzeichnet durch mehrere im Zugangskontrollbereich gelegene, mit dem entsprechenden Magnetcode der Magnetkarten (M) zu betätigende Schließfachschlösser (1100) sowie eine bei Kartenausgabe öffnende bzw. mit der ausgegebenen Karte zu öffnende Eingangssperre (300) eines Magnetkarten-Ausgabeautomaten (600) und einer Ausgangssperre (1700/1600), welcher Magnetkarten-Ausgabeautomat beim Zutritt dem Benutzer eine Magnetkarte des Kartenstapelmagazins (28) ausgibt, die während des Ausgabevorganges mit dem Magnetcode eines freien Schließfaches codiert wird und einen von einem Ergänzungscodeleser während des Ausgabevorganges zu erfassenden Ergänzungscode aufweist, wobei mittels eines Zentralrechners eine Zuordnung von Strichcode und Magnetcode erfolgt und die Ausgangssperre (1700) einen Karteneinsteckschlitz zur Auswertung des Ergänzungscodes der zurückgegebenen Magnetkarte (M) aufweist.

15. Zugangskontrollsystem nach Anspruch 14, dadurch gekennzeichnet, daß der Ergänzungscode als Strichcode gestaltet ist.

16. Zugangskontrollsystem nach Anspruch 14, gekennzeichnet durch eine Magnetcodelöscheinrichtung, die den Magnetcode der zurückgegebenen Magnetkarte löscht, bevor diese dem Kartenstapelmagazin (28) zugeführt wird.

## Claims

1. Coding apparatus for magnetic cards, having at least one magnetizing device which enters into contact with the surface of the card (M) to be magnetized and has a longitudinally displaceable magnetizing pin (40) and an exciting coil surrounding the latter, and also having an electrical control device for the exciting coil, the magnetizing pin (40), which tapers towards the end face, being arranged on one broad side (23) of a card run-through duct (19) and, on account of its longitudinal displaceability, being able to be brought into contact with the card by its end face (41), characterized in that the magnetizing pin (40) is arranged under spring prestress in a transverse duct bore (42), arranged perpendicularly to the card run-through duct (19), and the taper of the magnetising pin (40), acting as a run-on slope, protrudes by its height into the card run-through duct.

2. Coding apparatus according to Claim 1, characterized by a plurality of magnetizing devices (39), the magnetic pins (40) of which lie on longitudinal duct tracks arranged at different distances from the longitudinal edge of the card run-through duct (19).

3. Coding apparatus according to one or more of the preceding claims, characterized in that the magnetizing pins (40) lie offset with respect to one another in the longitudinal direction of the tracks.

4. Coding apparatus according to one or more of the preceding claims, characterized in that each magnetizing pin (40) has a step (43) which limits its entry path into the card run-through duct (19) and interacts with a corresponding counter-shoulder (44) or the transverse duct bore (42).

5. Coding apparatus according to one of more of the preceding claims, characterized in that the other broad side (18) of the card run-through duct (19) is formed by a duct wall (38) consisting of ferromagnetic material.

6. Coding apparatus according to one or more of the preceding claims, characterized by a card stacking magazine (28), arranged in the region of the beginning of the duct (30).

7. Coding apparatus according to one or more of the preceding claims, characterized by a slide (36), moving the lowermost card (M) of the stack of cards into the card run-through duct (19).

8. Coding apparatus according to one or more of the preceding claims, characterized by a plurality of pairs of transport rollers (P1, P2, P3), protruding beyond the broad sides (18, 23) of the card run-through duct (19), mutually neighbouring pairs of transport rollers having a smaller distance from each other than the length of the magnetic card (M).

9. Coding apparatus according to one or more of the preceding claims, characterized by a light barrier (49), situated in the region of the beginning of the duct and scanning the narrow edge (S) of the magnetic card (M).

10. Coding apparatus according to one or more of the preceding claims, characterized in that - seen in the card running-through direction (y) - behind each pair of transport rollers there is provided a further light barrier (52, 53) for subsequent synchronization.

11. Coding apparatus according to one or more of the preceding claims, characterized by a final light barrier (54), situated in the region of the end of the duct and registering the withdrawal of the magnetic card (M) from the card run-through duct (19).

12. Coding apparatus according to one or more of the preceding claims, characterized by a bar-code reader (55), assigned to the card run-through duct (19), for a bar code arranged on the broad side of the magnetic card (M).

13. Access control system having a coding apparatus according to one or more of the preceding claims, characterized by a regional magnetization of the key card, taking place in the card output region, such that, in addition to the magnetization regions adjusted to the locking of a lock, further regions are magnetized as an identifying supplementary code, which regions are not involved in the locking of the lock and are sensed by a reading device in the region of an exit barrier, evaluating the key card after use, for the purpose of evaluation alone or in combination with the evaluation taking place by means of locking-code magnetization.

14. Access control system having a coding apparatus according to one or more of the preceding claims, characterized by a plurality of locker locks (1100), situated in the access control region and to be operated by the corresponding magnetic code of the magnetic cards (M), and also an entrance barrier (300) of an automatic magnetic-card output machine (600), which barrier opens upon card output or is to be opened by the output card, and an exit barrier (1700/1600), which automatic magnetic-card output machine outputs upon access to the user a magnetic card of the card stacking magazine (28), which card is coded during the output operation with the magnetic code of a free locker and has a supplementary code, to be sensed by a supplementary-code reader during the output operation, an assignment of bar code and magnetic code taking place by means of a central computer and the exit barrier (1700) having a card-insert slot for evaluating the supplementary code of the returned magnetic card (M).

15. Access control system according to Claim 16, characterized in that the supplementary code is designed as a bar code.

16. Access control system according to Claim 16, characterized by a magnetic-code erasing device, which erases the magnetic code of the returned magnetic card before the latter is fed to the card stacking magazine (28).

## Revendications

1. Dispositif de codage pour des cartes magnétiques muni d'au moins un organe de magnétisation venant en appui sur la surface de la carte à magnétiser (M) et qui comprend une broche de magnétisation (40) coulissant longitudinalement et une bobine d'excitation (45) entourant cette broche ainsi qu'un organe de commande électrique pour la bobine d'excitation, la broche de magnétisation (40) s'effilant sur la face frontale, étant disposée sur une face large (23) d'un canal de passage de carte (19) et étant susceptible, du fait de sa capacité à se déplacer longitudinalement, de venir en contact par sa face frontale (41) avec la carte, caractérisé en ce que la broche de magnétisation (40) est disposée dans un alésage transversal de canal (42) placé perpendiculairement au canal (19) de passage de carte, en étant sollicité élastiquement et en ce que la partie effilée de la broche de magnétisation (40) faisant fonction de rampe d'accostage, fait saillie de toute sa hauteur dans le canal de passage de carte.

2. Dispositif de codage selon la revendication 1, caractérisé par plusieurs organes de magnétisation (39) dont les broches magnétiques (40) sont disposées à partir du bord longitudinal du canal de passage de carte (19) sur des pistes longitudinales de canal, selon des écartements différents.

3. Dispositif de codage selon une ou plusieurs des revendications précédentes, caractérisé en ce que les broches de magnétisation (40) sont décalées les unes par rapport aux autres dans la direction longitudinale des pistes.

4. Dispositif de codage selon une ou plusieurs des revendications précédentes, caractérisé en ce que chaque broche de magnétisation (40) comporte un gradin (43) délimitant le parcours d'entrée dans le canal de passage de carte (19), et coopérant avec un contre-épaulement correspondant (44) de l'alésage de canal (42).

5. Dispositif de codage selon une ou plusieurs des revendications précédentes, caractérisé en ce que l'autre face large (18) du canal de passage de carte (19) est constituée d'une paroi de canal (38) en matériau ferromagnétique.

6. Dispositif de codage selon une ou plusieurs des revendications précédentes, caractérisé par un magasin d'empilement de cartes (28) disposé dans la zone de l'entrée de canal (30).

7. Dispositif de codage selon une ou plusieurs des revendications précédentes, caractérisé par un tiroir (36) d'introduction de la carte inférieure (M) de l'empilement de cartes, dans le canal de passage de cartes (19).

8. Dispositif de codage selon une ou plusieurs des revendications précédentes, caractérisé par plusieurs paires de rouleaux de transport (P1, P2, P3) faisant saillie sur les faces larges (18, 23) du canal de passage de cartes (19), ces paires de rouleaux de transport adjacents étant écartées l'une de l'autre d'une distance inférieure à la longueur de la carte magnétique (M).

9. Dispositif de codage selon une ou plusieurs des revendications précédentes, caractérisé en ce qu'une barrière lumineuse (49) de détection du bord étroit (S) de la carte magnétique (M), est disposée dans la zone de début du canal.

10. Dispositif de codage selon une ou plusieurs des revendications précédentes, caractérisé en ce qu'il est prévu :
- dans la direction de déplacement (y) de la carte, derrière chaque paire de rouleaux de transport, une autre barrière lumineuse (52, 53) permettant la postsynchronisation.

11. Dispositif de codage selon une ou plusieurs des revendications précédentes, caractérisé par une dernière barrière lumineuse (54) disposée dans la zone de l'extrémité du canal et enregistrant l'entrée et la sortie de la carte magnétique (M) hors du canal de passage de cartes (19).

12. Dispositif de codage selon une ou plusieurs des revendications précédentes, caractérisé par un lecteur de code à barres (55), associé au canal de passage de carte (19) pour un code à barres disposé sur la face large de la carte magnétique (M).

13. Système de contrôle d'accès muni d'un dispositif de codage selon une ou plusieurs des revendications précédentes, caractérisé par une magnétisation de la carte, constituant la clé, par zones, réalisée dans la zone de sortie de la carte, de telle façon qu'en plus des zones de magnétisation déterminées pour la fermeture d'une serrure, soient magnétisées d'autres zones de code supplémentaires d'identification, ces zones n'étant pas impliquées dans la fermeture de la serrure et étant déterminées par un dispositif de lecture dans la zone d'une barrière de sortie exploitant la carte formant clé après usage, afin de les exploiter seules ou en combinaison avec la magnétisation réalisée sur le code de serrure.

14. Système de contrôle d'accès muni d'un dispositif de codage selon une ou plusieurs des revendications précédentes, caractérisé par plusieurs serrures de casiers à serrure (1100) disposées dans la zone de contrôle d'accès et à actionner par le code magnétique correspondant des cartes magnétiques (M), ainsi que par une barrière d'entrée (300) d'un système automatique de sortie de carte magnétique (600) et d'une barrière de sortie (1700/1600) s'ouvrant à la sortie de la carte ou à ouvrir avec la carte restituée, ce système automatique de sortie de cartes magnétiques remettant à l'entrée de l'utilisateur une carte magnétique du magasin d'empilement de cartes (28), cette carte étant codée pendant le processus de sortie avec le code magnétique d'un casier à serrure libre et présentant un code d'exploitation à saisir par un lecteur de code d'exploitation pendant le processus de sortie, et caractérisé en ce qu'un calculateur central réalise un classement des codes à barres et des codes magnétiques et en ce que la barrière de sortie (1700) comporte une fente d'insertion de carte pour l'exploitation du code complémentaire de la carte magnétique (M) restituée.

15. Système de contrôle d'accès selon la revendication 14, caractérisé en ce que le code complémentaire est réalisé sous la forme d'un code à barres.

16. Système de contrôle d'accès selon la revendication 14, caractérisé par un dispositif de synthèse magnétique qui efface le code magnétique de la carte magnétique restituée, avant que cette carte ne soit amenée au magasin d'empilement de cartes (28).
